Europäisches Patentamt

**European Patent Office**

Office européen des brevets

(19)

(11) Numéro de publication: **0 265 356 B1**

(12) **FASCICULE DE BREVET EUROPEEN**

(45) Date de publication du fascicule du brevet:
23.05.90

(51) Int. Cl.⁵: **C22B 58/00,** C22B 3/00,
C01G 15/00

(21) Numéro de dépôt: 87420285.6

(22) Date de dépôt: 22.10.87

(54) Extraction du gallium des liqueurs bayer à l'aide d'une résine adsorbante imprégnée.

(30) Priorité: 24.10.86 FR 8615362

(43) Date de publication de la demande:
27.04.88 Bulletin 88/17

(45) Mention de la délivrance du brevet:
23.05.90 Bulletin 90/21

(84) Etats contractants désignés:
AT BE CH DE ES GB GR IT LI LU NL SE

(56) Documents cités:
EP-A- 0 076 404
EP-A- 0 102 882
WO-A-82/00664
GB-A- 2 100 709
US-A- 3 637 711
US-A- 4 220 726
US-A- 4 437 994

CHEMICAL ABSTRACTS,
vol. 103, no. 2, juillet 1985, page 129, abrégé no. 8522n,
Columbus, Ohio, US; & JP-A-60 42 234 (MITSUBISHI
CHEMICAL INDUSTRIES CO., LTD) 06-03-1985

(73) Titulaire: ALUMINIUM PECHINEY, 23, rue Balzac,
F-75008 Paris Cédex 08(FR)

(72) Inventeur: Lamerant, Jean-Michel, Rue de Versailles,
F-13320 Bouc Bel Air(FR)

(74) Mandataire: Pascaud, Claude et al, PECHINEY 28, rue de
Bonnel, F-69433 Lyon Cédex 3(FR)

ACTORUM AG

**Description**

DOMAINE TECHNIQUE

La présente invention a pour objet un procédé d'extraction du gallium contenu dans les solutions d'aluminate de sodium, appelées également liqueurs Bayer, résultant de l'attaque sodique des bauxites selon le procédé Bayer. Elle a plus précisément pour objet un procédé d'échange d'espèces chimiques entre une phase stationnaire constituée par une résine adsorbante imprégnée d'un complexant du galluim et une phase aqueuse constituée par la liqueur Bayer.

ART ANTERIEUR

Le gallium connu longtemps pour ses seules propriétés de fondre à basse température permettant la fabrication d'alliages à bas point de fusion a bénéficié depuis quelques années d'un regain d'intérêt considérable en raison notamment du développement de l'arséniure de gallium pour l'industrie électronique, préféré par exemple au silicium comme semi-conducteur dans certaines conditions d'utilisation très spécifiques.

Actuellement, le gallium provient pour une part importante des liqueurs Bayer, solutions d'aluminate de sodium résultant de l'attaque par l'hydroxyde de sodium de la bauxite selon le procédé Bayer bien connu de fabrication de trihydrate d'alumine. Malgré une teneur relativement élevée de 200 à 600 mg de gallium par litre de liqueur, il est difficile de récupérer sélectrivement le gallium en présence de grandes quantités d'aluminium dont les propriétés chimiques sont très voisines et d'autres impuretés solubles en milieu très alcalin, vanadate, zincate, ferrate, molybdate...

L'électrolyse sur cathode de mercure a été le seul procédé utilisé lorsque les quantités de gallium à extraire étaient faibles, mais avec l'accroissement des besoins et les problèmes posés par la manipulation de grande quantité de mercure, on s'est orienté vers les procédés d'ex traction liquide/liquide en particulier avec l'utilisation de l'hydrox-8 quinoléine appelée également oxime dont le complexe avec le gallium n'est soluble que dans les solvants chlorés.

Un progrès sensible a été réalisé avec l'apparition sur le marché des hydroxy-8 quinoléines substituées en 7 regroupées sous le terme alkyl ou alcényl-7 hydroxy-8 quinoléine fabriquées notamment par la société ASHLAND OIL (US 3637711); cette famille de complexant du gallium permettant l'utilisation de solvants non chlorés. Parallèlement le problème de l'amélioration de la cinétique de l'extraction liquide/liquide du gallium a été étudié par la société RHONE-POULENC. Ainsi des progrès significatifs ont été réalisés en augmentant les surfaces d'échange entre l'agent d'extraction alcényl-7 hydroxy-8 quinoléine et la solution alcaline contenant le gallium par formation de microémulsion (EP 0102280 et EP 0102882).

En raison toutefois des volumes considérables d'agent d'extraction et de solvant à mettre en jeu puis à régénérer afin d'extraire industriellement le gallium contenu dans la liqueur Bayer plusieurs études ont été engagées pour extraire le gallium sur résines échangeuses d'ions. Ainsi la société SUMITOMO CHEMICAL a proposé l'extraction par une résine présentant comme groupement actif la fonction amide-oxime. Bien qu'apparemment plus séduisant que l'extraction liquide/liquide ce procédé s'est avéré très difficile à mettre en oeuvre en raison de la fragilité des groupements amide-oxime et par suite de la dégradation de la résine au cours des cycles successifs d'élution en milieu acide de gallium fixé sur la résine.

De son côté, la société MITSUBISHI CHEMICAL INDUSTRY dans son brevet japonais publié sou le N° 85-095264 a proposé d'imprégner des résines adsorbantes à base de polymères macroporeux avec des complexants du groupe Alcényl-7 hydroxy-8 quinoléine, démontrant qu'il était possible de fixer de petites quantités de gallium en solution sur la phase stationnaire ainsi cons tituée, puis d'éluer le gallium avec les acides minéraux classiques. Ce brevet toutefois reste silencieux sur les capacités de ces résines plus précisément sur les charges de gallium que l'on peut espérer fixer. Par ailleurs tout les essais d'extraction décrits ont été réalisés à partir de solution d'aluminate de sodium très diluée excluant toute application directe du procédé aux liqueurs industrielles Bayer.

Tout récemment, dans une communication faite à 1'I.S.E.C. à Munich en Septembre 1986, Cote et Bauer ont étudié sur différentes résines adsorbantes vendues sous le nom générique d'Amberlite XAD® et imprégnées de (tétraméthyl-5,5,7,7, octène-1 yl-3)-7 hydroxy-8 quinoléine vendue sous la dénomination commercial de "Kelex"®, l'influence de différents paramètres tels que la quantité d'agent d'extraction ou complexant fixe sur la résine, les concentrations en gallium aluminium et hydroxyde de sodium, la nature chimique de la résine adsorbante ainsi que l'effet d'additifs propres à activer la cinétique. Il en ressort que des capacités de fixation supérieures à 3 grammes de gallium par litre de résine ont été obtenues avec la résine Amberlite XAD7 à squelette ester acrylique et de caractère semi-polaire mais avec des solutions d'aluminate de sodium dont la concentration en gallium était au moins 5 fois supérieure à celle des liqueurs industrielles excluant ainsi toute possibilité d'application du procédé à ces liqueurs dont la concentration ne peut en aucun cas être modifiée. Pour Bauer et Cote la nature chimique de la résine adsorbante paraît beaucoup plus déterminante que sa texture (surface active mesurée par méthode BET, porosité, distribution des tailles de pore) puisque les auteurs concluent à la supériorité des résines adsorbantes à chaîne aliphatique ester acrylique (Amberlite XAD7) sur les résines adsorbantes à noyau aromatique type polystyrène (Amberlite XAD2) jugées inadaptées.

## PROBLEME POSE

La recherche d'une méthode industrielle de récupération du gallium par passage direct de liqueur Bayer sur résine sans dilution ni concentration préalables tout en assurant la fixation d'au moins 3 grammes de gallium par litre de résine sans dégradation rapide de la phase stationnaire constituée par une résine échangeuse d'ions ou une résine adsorbante imprégnée, demeurait donc l'objectif à atteindre.

## OBJET DE L'INVENTION

Lors d'essais de fixation puis d'élution de gallium sur différentes résines adsorbantes imprégnées la demanderesse a pu constater de façon inattendue qu'une résine adsorbante à chaîne aromatique polystyrénique commercialisée sous le nom d'Amberlite XAD 1180 s'avérait nettement supérieure à la classique Amberlite XAD7 de l'art antérieur et qu'en définitive la prise en compte de certaines caractéristiques physiques jusque là négligées et relatives notamment à la texture de la résine était déterminante.

Plus précisément l'invention est un procédé de récupération du gallium contenu dans les solutions d'aluminate de sodium issues du procédé Bayer par échange d'espèces chimiques entre une phase stationnaire constituée par une résine adsorbante macroporeuse chargée en alcényl 7 hydroxy-8 quinoléine et la phase aqueuse d'aluminate de sodium caractérisé par le fait que la résine sèche avant imprégnation a: une surface spécifique BET supérieure à 450 m2/g, un volume poreux au moins égal à 1500 mm3/gramme de résine sèche, un diamètre moyen des pores comprise entre 80 Å et 500 Å (8–50 nm) avec au moins 80% du volume poreux constitué de pores de diamètre compris entre 40 Å et 5000 Å (4–500 nm), un taux d'expansion en milieu aqueux n'excèdant pas 20% et qu'elle est imprégnée d'alkyl ou alcènyl-7 hydroxy-8 quinoléine dans la proportion de 250 à 350 grammes par litre de résine sèche.

## DESCRIPTION

Les essais qui ont conduit à la présente invention ont été menés parallèlement sur plusieurs types de résines imprégnées avec le même agent d'extraction à savoir le Kelex 100 de formule (tétraméthyl-5,5,7,7 octène-1 yl-3)-7 hy droxy-8 quinoléine.

A noter que le taux d'imprégnation par l'agent d'extraction de préférence situé entre 250 g/litre et 350 g/litre de résine sèche peut être exprimé de façon plus précise en mole par m2 ou en mole par gramme de support sec. Ainsi dans le cas d'une résine dont la surface BET est de 450 m2/g et dont 1 litre à l'état sec pèse 230 g, ce taux d'imprégnation varie de $5,38 \cdot 10^{-6}$ mole par m2 ou $1,67 \cdot 10^{-3}$ g/m2 à $7,53 \cdot 10^{-6}$ mole par m2 ou $2,34 \cdot 10^{-3}$ g/m2.

Qautre résines se distinguant soit par leur nature chimique soit par leur texture ont été imprégnées de Kelex 100 en visant un taux d'imprégnation de l'ordre de 280 g/litre de résine sèche considéré dans une étude antérieure comme particulièrement favorable pour la fixation du gallium sur des résines adsorbantes dont la surface BET est voisine de 500 m2/g.

- Résine Amberlite XAD 7 à squelette ester acrylique déjà étudiée dans l'art antérieur et considérée, en raison de son caractère à la fois hydrophile et hydrophobe, comme le support le plus adapté pour favoriser l'adsorption par l'intermédiaire de ses chaînes aliphatiques de la chaîne substituée en 7 des molécules de Kelex dont le groupe hydroxy-8 quinoléine conserve par contre son entière mobilité pour fixer le gallium en solution.

- Résine Amberlite XAD 1180 à squelette polystyrénique de caractère hydrophobe ou non polaire considérée comme la résine Amberlite XAD 2 de l'art antérieur comme peu performant pour l'extraction du gallium en raison de l'effet inhibiteur des noyaux aromatiques de ces résines sur le groupe hydroxy-8 quinoléine du Kelex 100 dont la mobilité est diminuée vis à vis du gallium à extraire de la solution aqueuse alcaline.

- Résine Duolite S 861 de même nature chimique que la résine Amberlite XAD 1180 mais de texture plus fine et à faible porosité.

- Résine Duolite S 866 dite "complexe" résultant d'une copolymérisation de polystyrène polyester et de texture assez similaire à celle de S 861.

Le tableau 1 ci-après résume les principales caractéristiques physico-chimiques de ces résines.

TABLEAU 1

| Résine | Amberlite XAD 7 | Amberlite XAD 1180 | Duolite S 861 | Duolite S 866 |
|---|---|---|---|---|
| Nature Chimique | Ester acrylique | Polystyrène | Polystyrène | "complexe" |
| Propriété | hydrophile hydrophobe | hydrophobe | hydrophobe | non spécifié |
| Volume poreux mm3/gramme | 1200 | 1700 | 900 | 710 |
| Taille moyenne des pores Å (nm) | 80 Å (8 nm) | 120 Å (12 nm) | 28 Å (2,8 nm) | 28,5 Å (2,85 nm) |
| % volume de pore entre 40 Å et 5000 Å (4–500 nm) | > 80% | 70 et 80% | < 70% | < 60% |
| Surface spécifique BET m2/g | 450 | 650 | 600 | 500 |
| Taux expansion % sec/humide | 69% | 11%* | 40% | 17% |
| (* La fiche technique du fournisseur indique < 20%) | | | | |

Les solutions prélevées directement dans le cycle Bayer après l'étape de décomposition des liqueurs sursaturées en aluminate de sodium pour précipiter le trihydroxyde d'aluminium ont une concentration en hydroxyde de sodium libre comprise entre 80 et 140 g/l, une concentration en $Al_2O_3$ soluble comprise entre 60 et 110 g/l et une concentration en gallium soluble comprise entre 150 et 350 mg/l. Ces solutions sont maintenues à une température de 40 à 60°C pendant leur passage sur résine, soit sensiblement la température en fin d'étape de décomposition. Ainsi après fixation du gallium ces solutions peuvent être réintroduites directement dans le cycle Bayer de production d'alumine. Dans le cas présent la même solution utilisée sur les 4 résines précédemment caractérisées avait la composition suivante:

$Na_2O$ caustique : 163 g/l

$Al_2O_3$ : 98,1 g/l

Ga : 240 mg/l

Un autre objet de la présente invention est de fournir un procédé d'utilisation de ces résines imprégnées permettant de comparer leur efficacité respective pour l'extraction du gallium et de choisir la plus performante pour l'application industrielle.

Ce procédé sa caractérise par les étapes suivantes:

a) Préconditionnement de la résine avec successivement des lavages à l'eau desionisée, à l'éthanol, à l'acide chlorhydrique 1N puis un lavage exhaustif à l'eau jusqu'à élimination complète des ions Cl-contrôlée par un test à $AgNO_3$ et un séchage à l'étuve à 110°C jusqu'à poids constant. Toutefois cette étape n'est pas nécessaire avec la résine XAD 1180 livrée sèche.

b) Imprégnation de la résine par un solution de Kelex 100 dilué dans un alcool et de préférence l'éthanol à raison d'environ 15 à 30% en poids de Kelex 100 dans l'éthanol. Cette teneur n'est pas critique. On se place pour des raisons pratiques un peu en-dessous du seuil de solubilité du Kelex dans l'alcool, la qualité de solution de Kelex 100-éthanol étant calculée pour obtenir le rapport masse de Kelex 100/volume de résine sèche compris entre 250 et 350 g par litre et plus précisément dans le cas présent de 280 g/litre. Cette phase d'imprégnation peut être réalisée en une ou plusieurs opérations d'imprégnation successives avec des séchages intermédiaires à 60°C sous vide permettant d'éliminer l'éthanol et de contrôler la quantité de Kelex 100 adsorbée. Après un dernier séchage sous vide la résine imprégnée de Kelex 100 est imprégnée à l'eau desionisée, dégazée sous vide, puis chargée en colonne.

c) La fixation du gallium est obtenue par passage de la liqueur Bayer maintenue entre 40°C et 60°C avec un débit de 2 à 10 B V à l'heure, c'est-à-dire un débit horaire de 2 à 10 fois le volume correspondant du lit de résine dans la colonne. Dans le cas présent 1200 cm3 de liqueur Bayer décomposée ont été passées en 4 heures sur chaque résine soit 300 cm3/heure correspondant selon le volume occupé par chaque résine dans sa colonne à une plage de variation de 3,75 B V/h à 6,4 B V/h comme indiqué sur la tableau 2.

d) Après lavage à l'eau de la résine l'élution du gallium fixé est réalisée par un acide minéral fort et de préférence par l'acide sulfurique de concentration comprise entre 2 N et 6 N et à température ambiante avec un débit de passage de 2 à 10 B V/h. Dans le cas présent seules les résines Amberlite XAD7 et AMBERLITE XAD1180 ayant fixé du gallium ont pu être éluées par une solution d'acide sulfurique 4,5N avec un débit de 300 cm3/h représentant successivement des débits de 3,7 B V/h et de 6,4 B V/h comme indiqué sur le tableau 2 ci-après.

TABLEAU 2

| Résine | Amberlite XAD 7 | Duolite S 861 | Duolite S 866 | Amberlite XAD 1180 |
|---|---|---|---|---|
| Réf. essai | GR 239 | RR 349 | RR 350 | RR 354 |
| Taux d'imprégnant en g de Kelex: | | | | |
| 1) par 1 résine sèche | 282 | 287 | 280 | 275 |
| 2) par 1 résine en colonne | 247 | 275 | 243 | 245 |
| Volume et débit de liqueur à la fixation | 15 BV à 3,75 BV/h | 27 BV à 6,8 BV/h | 24,6 BV à 6,1 BV/h | 25 BV à 6,4 BV/h |
| Volume du pic et débit à l'élution | 1,1 BV à 3,7 BV/h | pas d'élution | pas d'élution | 1 BV à 6,4 BV/h |
| Gallium fixé g/l de résine en colonne – sèche – livrée – g/kg de Kelex | 1,87 3,6 1,6 12,7 | 0 | 0 | 3,77 4,2 4,2 15,4 |
| Flux moyen de gallium fixé g/h/l de résine | 0,47 | 0 | 0 | 0,94 |

A noter que :

a) Pendant l'étape de fixation le contrôle des teneurs en gallium était effectué en entrée et en sortie de colonne et, pendant l'étape d'élution, le même contrôle était effectué en sortie de colonne.

b) dans le cas des résines XAD7 et XAD1180 donnant un résultat positif au premier cycle de fixation-élution, 2 cycles supplémentaires ont été réalisés pour juger de la stabilité des résultats.

Il ressort donc contrairement à ce qu'enseigne l'art antérieur que l'on puisse obtenir à partir de résine hydrophobe à squelette polysytrénique comme l'Amberlite XAD1180 d'excellents résultats de fixation élution de gallium puisque des charges supérieures à 4g de Ga par litre de résine ont été atteintes et cela avec un flux moyen de gallium fixé voisin de 1 g/heure par litre de résine, performances supérieures à celles de la classique résine Amberlite XAD 7 à squelette ester acrylique de caractère semi-polaire. Il en résulte que les caractéristiques définissant la texture des résines sont bien à prendre en compte en priorité dans le choix d'une résine adsorbante pour imprégnation.

En se référant à la résine Amberlite XAD1180, une résine performante pour l'extraction du gallium des liqueurs Bayer doit satisfaire à l'ensemble des caractéristiques suivantes :

Le volume poreux par gramme de résine sèche (ou la porosité) doit être le plus élevé possible et au moins égal à 1500 mm³/g mais il doit être aussi constitué en majeure partie de pores dont la taille permet l'imprégnation par l'agent d'extraction ici le Kelex 100. Ainsi les diamètres de pore ne doivent pas être trop faibles, c'est-à-dire inférieurs à 40 Å (4 nm) de telle sorte que le Kelex puisse migrer dans les pores et imprégner leur surface, mais ils ne doivent pas non plus être trop grands, c'est-à-dire supérieurs à 5000 Å (500 nm), car dans ce cas un volume inutilement important de la résine ne sert qu'à laisser circuler la phase aqueuse, le rapport surface/volume étant trop faible pour que le complexant puisse fixer une quantité significative de gallium.

A l'intérieur de cette plage de diamètres de pore comprise entre 40 Å et 5000 Å (4–500 nm), il y a avantage pour des résines de volume poreux > 1500 mm³/g, à avoir la plus grande surface active de pore possible, et d'au moins 450 m²/g sur laquelle viendra s'adsorber le Kelex imprégné à raison de 250 g/litre à 350 g/litre de résine sèche.

Enfin un dernier critère doit être pris en compte à savoir le taux moyen de gonflement ou d'expansion de la résine sèche lorsqu'elle est mise en contact avec un milieu aqueux. Il ne doit pas excéder 20% car moins le réseau reticulé de la résine est perturbé moins la déformation des pores et canaux est importante et moins les conditions d'adsorption du Kelex s'écartent du modèle optimisé défini à partir des caractéristiques de la résine sèche.

Des essais d'application à l'échelle pilote de résine Amberlite XAD 1180 imprégnée de Kelex 100 pour l'extraction du gallium des liqueurs Bayer ont été réalisés en vue de confirmer les résultats de l'expérimentation comparative de ladite résine avec les 3 autres résines, résultats répondant déjà au problème posé de la capacité d'extraction du gallium à raison d'au moins 2 g/litre de résine directement à partir des liqueurs Bayer et sans dégradation de la phase stationnaire constituée par la résine imprégnée.

## EXEMPLE D'APPLICATION

Le procédé que nous allons décrire utilise les propriétés d'une nouvelle résine non fonctionnelle, l'Amberlite XAD 1180 comme support d'un complexant du gallium.

2,9 litres de résine Amberlite XAD 1180 ont été séchés à l'étuve à 80°C jusqu'à poids constant. La masse correspondante était de 667 g. Cette résine a été mise en contact avec une solution de Kelex 100 dans l'éthanol absolu, comportant 4520 g d'éthanol et 800 g de Kelex 100 (soit 15% en masse). Le mélange obtenu a été soumis au vide d'une pompe à membrane pour dégazer les grains de résine et faire pénétrer la solution alcoolique, puis il a été placé sur un bain de sable de manière à faire évaporer doucement la majorité de l'alcool. Le séchage a été complété à l'étuve à 80°C. Ensuite, la résine sèche a été pesée. La masse résultante, soit 1466 g, correspondait à la fixation de la quasi- totalité du Kelex. Le taux d'imprégnation était donc de 275 g de Kelex par litre de résine sèche. La résine imprégnée de Kelex a été réhydratée en présence d'eau désionisée et débullée sous vide, puis mise en colonne. Le volume de résine en colonne était de 3,2 litre avec une hauteur de lit de 30 cm. Quatre vingts litres de liqueur Bayer décomposée issue de fabrication et maintenue à 40°C, ont été passé sur la résine à raison de 20 litres à l'heure. A l'issue de cette opération, les dosages ont montré que la teneur en gallium était passée de 240 g/l à l'entrée de la colonne, à 90 mg/l dosés sur la liqueur moyenne recueillies en sortie. Après un lavage de la résine par 6 litres, d'eau, une solution d'acide sulfurique 4,3 N a été passée sur la colonne au débit de 20 litres par heure pendant 30 minutes. Le dosage d'échantillons régulièrement prélevés à la sortie de la colonne a fait apparaître un pic de concentration en gallium s'étalant sur 3,2 litres, avec un maximum de 6,8 g/l de Ga. La solution d'élution correspondant à ce pic ayant été recueillie séparément, sa teneur en gallium a été dosée et valait 3,75 g/l de Ga, soit 12 g de Ga dans le volume de 3,2 1 considéré. La résine avait donc fixé 12 g de gallium, soit 3,75 g de Ga par litre de résine en colonne.

## Revendications

1. Procédé de récupération du gallium contenu dans une solution aqueuse d'aluminate de sodium fortement alcaline par échange d'espèces chimiques entre une phase stationnaire constituée par une résine adsorbante microporeuse imprégnée d'Alkyle ou alcényl-7 hydroxy-8 quinoléine et la phase aqueuse d'aluminate de sodium caractérisé, par le fait que la résine sèche avant imprégnation a une surface spécifique mesurée par la méthode BET au moins égale à 450 m2/g de résine, un volume de pores au moins égale à 1500 mm3/g de résine, un diamètre moyen des pores compris entre 8,0 et 50,0 nm avec au moins 80% de volume constitué de pore dont le diamètre est compris entre 4,0 et 500,0 nm, un taux d'expansion ou de gonflement en milieu aqueux n'excédant pas 20% et en ce qu'elle est imprégnée d'Alkyl ou alcényl-7 hydroxy-8 quinoléine dans la proportion de 250 à 350 g par litre de résine sèche.

2. Procédé selon la revendication 1 caractérisé en ce que l'Alcényl-7 hydroxy-8 quinoléine imprégné sur la résine est la (tétraméthyl-5,5,7,7 octène-1-yl-3)-7 hydroxy-8 quinoléine commercialisée sous le nom de Kelex 100® et dans la proportion de $5 \cdot 10^{-6}$ mole par m2 de résine sèche à $15 \cdot 10^{-6}$ mole par m2 de résine sèche.

3. Procédé selon les revendications 1 et 2 prises séparément caractérisé en ce que la résine adsorbante microporeuse est une résine squelette polystyrénique de caractère non polaire hydrophobe commercialisée sous le nom d'Amberlite XAD 1180®.

4. Procédé selon la revendication 1 caractérisé en ce que la solution aqueuse d'aluminate de sodium fortement alcaline est la liqueur décomposée prélevée dans le cycle Bayer après l'étape de précipitation d'hydroxyde d'aluminium.

5. procédé selon la revendication 4 caractérisé en ce que la solution aqueuse d'aluminate de sodium prélevée dans le cycle Bayer à une température comprise entre 40°C et 60°C a une concentration en soude libre comprise entre 80 et 140 g/litre, une concentration en alumine $Al_2O_3$ dissoute comprise entre 60 et 110 g/litre et une concentration en gallium solubilisé comprise entre 150 et 350 mg/litre.

6. Procédé selon les revendications 1 à 5 prises séparément caractérisé par le fait qu'il comporte les étapes suivantes:
a) le préconditionnement de la résine avant imprégnation,
b) l'imprégnation de la résine par le Kelex 100 dilué dans un solvant pris dans le groupe des solvants ayant une fonction alcool;
c) Fixation du gallium par passage sur la résine imprégnée de la solution d'aluminate de sodium prélevée dans le cycle Bayer puis lavage à l'eau;
d) Elution par un acide minéral fort à une concentration au moins égale à 1N.

7. Procédé selon la revendication 6 caractérisé en ce que le préconditionnement de la résine est réalisé par lavages successifs de ladite résine à l'eau désionisée, à l'éthanol, à l'acide chlorhydrique 1N puis lavage exhaustif à l'eau jusqu'à élimination complète des ions C1- contrôlée par un test à AgNO3 enfin par séchage à l'étuve à 110°C jusqu'à poids constant.

8. Procédé selon les revendications 6 et 7 caractérisé en ce que la résine préconditionnée provenant de l'étape a) est imprégnée par une solution de Kelex 100 diluée à raison de 10 à 30% en poids dans de l'éthanol de manière à conserver, après imprégnation et séchage sous vide destiné à éliminer le solvant, un poids de Kelex dans la résine compris entre 230 et 700, et de préférence entre 250 et 350 g/l de rési-

ne sèche et en ce qu'après séchage, la résine imprégnée de Kelex est imprégnée à l'eau désionisée avant dégazage sous vide.

9. Procédé selon les revendications 6,7,8 caractérisé en ce que l'on procède à la fixation du gallium sur la résine imprégnée issue de l'étape b) par passage de la solution d'aluminate de sodium maintenue à une température de 40 à 60°C, avec un débit horaire de 2 à 10 fois le volume du lit de résine de la colonne, c'est-à-dire de 2 à 10 B V/heure.

10. Procédé selon les revendications 6,7,8 et 9 caractérisé en ce qu'après l'étape c) de fixation du gallium on lave à l'eau puis on élue à température ambiante dans une dernière étape d) le gallium par passage d'une solution aqueuse d'acide sulfurique dont la concentration est comprise entre 3 N et 6N, à un débit de 2 à 10 B V/heure.

## Patentansprüche

1. Verfahren zur Gewinnung des in einer wässerigen, stark alkalischen Natriumaluminatlösung enthaltenen Galliums durch Austausch chemischer Stoffe zwischen einer stationären Phase, die aus einem mikroporösen adsorbierenden Harz besteht, das mit Alkyl oder Alcényl-7-hydroxy-8-chinolin imprägniert ist, und der wässerigen Natriumaluminatphase, dadurch gekennzeichnet, daß das trockene Harz vor Imprägnierung eine nach dem BET-Verfahren gemessene spezifische Oberfläche von wenigstens gleich 450 m²/g Harz, ein Porenvolumen von wenigstens gleich 1500 mm³/g Harz, einen mittleren Durchmesser der Poren im Bereich von 8,0 bis 50,0 nm, wobei wenigstens 80% dieses Volumens aus Poren bestehen, deren Durchmesser im Bereich von 4,0 bis 500,0 nm ist, einen Ausdehnungs- oder Quellungsgrad in wässerigem Medium hat, der 20% nicht übersteigt, und daß es mit Alkyl oder Alcényl-7-hydroxy-8-chinolin im Verhältnis von 250 bis 350 g je Liter trockenen Harzes imprägniert wird.

2. Verfahren nach dem Anspruch 1, dadurch gekennzeichnet, daß das auf das Harz imprägnierte Alcényl-7-hydroxy-8-chinolin das (Tetramethyl-5,5,7,7-octen-1-yl-3)-7-hydroxy-8-chinolin, das im Handel unter der Bezeichnung Kelex 100® erhältlich ist, und im Verhältnis von $5 \cdot 10^{-6}$ Mol je m² trockenes Harzes bis $15 \cdot 10^{-6}$ Mol je m² trockenen Harzes ist.

3. Verfahren nach den getrennt genommenen Ansprüchen 1 und 2, dadurch gekennzeichnet, daß das mikroporöse adsorbierende Harz ein Polystyrolskelettharz nicht-polarer hydrophober Art ist, das im Handel unter der Bezeichnung Amberlite XAD 1180® erhältlich ist.

4. Verfahren nach dem Anspruch 1, dadurch gekennzeichnet, daß die wässerige, stark alkalische Natriumaluminatlösung die zersetzte Flüssigkeit ist, die im Bayer-Zyklus nach dem Schritt zur Ausfällung von Aluminiumhydroxid entnommen wird.

5. Verfahren nach dem Anspruch 4, dadurch gekennzeichnet, daß die im Bayer-Zyklus bei einer Temperatur im Bereich von 40°C bis 60°C entnommene wässerige Natriumaluminatlösung eine Konzentration an freiem Natron im Bereich von 80 bis 140 g/Liter, eine Konzentration von gelöstem Aluminiumoxid $Al_2O_3$ im Bereich von 60 bis 110 g/Liter und eine Konzentration an solubilisiertem Gallium im Bereich von 150 bis 350 mg/Liter hat.

6. Verfahren nach den getrennt genommenen Ansprüchen 1 bis 5, dadurch gekennzeichnet, daß es die folgenden Schritte aufweist:

a) die Vorbehandlung des Harzes vor Imprägnierung;

b) die Imprägnierung des Harzes durch das Kelex 100, das in einem Lösungsmittel gelöst ist, das aus der Gruppe der Lösungsmittel mit einer Alkoholgruppe genommen wird;

c) Festlegung des Galliums auf dem imprägnierten Harz mittels Durchlaufs der im Bayer-Zyklus entnommenen Natriumaluminatlösung, danach Waschen mit Wasser;

d) Elution durch eine starke Mineralsäure einer Konzentration von wenigstens gleich 1 N.

7. Verfahren nach dem Anspruch 6, dadurch gekennzeichnet, daß die Vorbehandlung durch aufeinanderfolgende Waschungen des Harzes mit entionisiertem Wasser, Ethanol, 1 N Salzsäure, danach erschöpfende Waschung mit Wasser bis zur völligen Beseitigung der Cl⁻-Ionen, die durch einen AgNO₃-Test geprüft wird, und schließlich durch Trocknung im Trockenofen bei 110°C bis zu konstantem Gewicht erfolgt.

8. Verfahren nach den Ansprüchen 6 und 7, dadurch gekennzeichnet, daß das vom Schritt a) kommende vorbehandelte Harz mit einer Lösung von Kelex 100, das in einem Anteil von 10 bis 30 Gew.-% in Ethanol gelöst ist, derart imprägniert wird, daß man nach Imprägnierung und zur Beseitigung des Lösungsmittels bestimmter Trocknung ein Kelexgewicht im Harz im Bereich von 230 bis 700 und vorzugsweise von 250 bis 350 g/l trockenes Harz erhält, und daß das mit Kelex imprägnierte Harz vor Entgasung im Vakuum mit entionisiertem Wasser imprägniert wird.

9. Verfahren nach den Ansprüchen 6, 7, 8, dadurch gekennzeichnet, daß man die Festlegung des Galliums auf dem vom Schritt b) kommenden imprägnierten Harz mittels Durchlaufs der auf einer Temperatur von 40 bis 60°C gehaltenen Natriumaluminatlösung mit einem stündlichen Durchsatz vom 2- bis 10-fachem des Volumens des Harzbetts der Säule, d.h. von 2 bis 10 B V/Stunde vornimmt.

10. Verfahren nach den Ansprüchen 6, 7, 8 und 9, dadurch gekennzeichnet, daß man nach dem Schritt c) der Festlegung des Galliums mit Wasser wäscht und man danach bei Umgebungstemperatur in einem letzten Schritt d) des Gallium mittels Durchlauf einer wässerigen Schwefelsäurelösung, deren Konzentration im Bereich von 3 N bis 6 N ist, mit einem Durchsatz von 2 bis 10 B V/Stunden eluiert.

## Claims

1. A method of recovering the gallium contained in an aqueous solution of highly alkaline sodium aluminate by exchange of chemical species between a stationary phase consisting of a microporous adsorbent resin impregnated with a 7-alkenyl 8-hydroxy quinoline charge and the aqueous phase of sodium aluminate characterised by the fact that prior to impregnation the dry resin has a specific surface area, measured by the BET method, which is at least equal to 450 sq.m/g of resin, a pore volume at least equal to 1500 cu.mm/g of resin, a mean pore diameter of between 8.0 and 50.0 nm with at least 80% of this volume consisting of pores of a diameter comprised between 4.0 and 500.0 nm, an expansion rate in an aqueous medium not exceeding 20%, and in that it is impregnated with 7-alkyl or alkenyl 8-hydroxy in a proportion of 250 to 350 g per litre of dry resin.

2. A method according to Claim 1, characterised in that the 7-*alkyl or alkenyl)-8-hydroxy quinoline impregnated on the resin is 7-(5,5,7,7-tetramethyl-oct-1-en-3-yl)-8-hydroxy quinoline marketed under the name Kelex 100 and in a proportion of $5.10^{-6}$ mole per sq.m of dry resin to $15.10^{-6}$ mole per sq.m of dry resin.

3. A method according to Claims 1 and 2 considered separately, characterised in that the microporous adsorbent resin is a polystyrene skeleton resin of a hydrophobic nonpolar type marketed under the name Amberlite XAD 1180.

4. A method according to Claim 1, characterised in that the aqueous solution of highly alkaline sodium aluminate is the decomposed liquor drawn from the Bayer cycle after the aluminium hydroxide precipitation state.

5. A method according to Claim 4, characterised in that the aqueous solution of sodium aluminate drawn from the Bayer cycle is at a temperature of between 40°C and 60°C, has a free soda concentration of between 80 and 140 g/litre, a concentration of dissolved alumina $Al_2O_3$ of between 60 and 110 g/litre and a solubilised gallium concentration of between 150 and 350 mg/litre.

6. A method according to Claims 1 to 5, considered separately and characterised in that it comprises the following stages:
   a) preconditioning of the resin prior to impregnation;
   b) impregnation of the resin by Kelex 100 dissolved in a solvent obtained from the group of solvents which have an alcohol function;
   c) fixing of the gallium by passage of the resin impregnated with the sodium aluminate solution drawn from the Bayer cycle followed by washing with water;
   d) elution by a strong mineral acid at a concentration which is at least equal to 1N.

7. A method according to Claim 6, characterised in that preconditioning of the resin is carried out by successive washings of the said resin with deionised water, ethanol, hydrochloric acid 1N followed by exhaustive washing with water until complete elimination of the C1 ions, monitored by a test using AgNO3 and finally by drying in an oven at 110°C until the attainment of a constant weight.

8. A method according to Claims 6 and 7, characterised in that the preconditioned resin emanating from stage a) is impregnated with a Kelex 100 solution diluted at the rate of 10 to 30% by weight in ethanol in such a way as to retain, after impregnation and drying in a vacuum intended to eliminate the solvent, a weight of Kelex in the resin of between 230 and 700, and preferably between 250 and 350 g/l of dry resin and in that, after drying, the Kelex impregnated resin is impregnated with deionised water prior to degasification in a vacuum.

9. A method according to Claims 6, 7 and 8, characterised in that the gallium is fixed on the impregnated resin from stage b) by passage of the sodium aluminate solution which is maintained at a temperature of 40 to 60°C at an hourly rate of 2 to 10 times the volume of the resin bed in the column, that is to say 2 to 20 B V/hour.

10. A method according to Claims 6, 7, 8 and 9, characterised in that after stage c) of fixing the gallium, the result is washed with water and then, in a final stage d), the gallium is eluted at ambient temperature by passage of an aqueous solution of sulphuric acid, the concentration of which is comprised between 3 N and 6 N, at a rate of flow of 2 to 10 B V/hour.